# FASCICULE DE BREVET EUROPEEN

(11) **EP 3 704 773 B1**
(45) Date de publication et mention de la délivrance du brevet: **26.10.2022**
(21) Numéro de dépôt: 18808442.0
(22) Date de dépôt: 31.10.2018
(51) Int. Cl.: H02G 1/12

(54) **TÊTE DE COUPE POUR APPAREIL ADAPTÉ À DÉGAINER UN CÂBLE COMPRENANT DES MOYENS DE RÉGLAGE D'UNE PROFONDEUR DE COUPE**
SCHNEIDKOPF FÜR EINE VORRICHTUNG, DIE ZUM ABISOLIEREN VON KABELN GEEIGNET IST, MIT MITTELN ZUM EINSTELLEN EINER SCHNEIDTIEFE
CUTTING HEAD FOR APPARATUS SUITABLE FOR STRIPPING CABLES, COMPRISING MEANS FOR ADJUSTING A CUTTING DEPTH

(30) Priorité: 02.11.2017 FR 1760316
(43) Date de publication de la demande: 09.09.2020
(73) Titulaire: Derancourt Ingenierie, 66270 Le Soler (FR)
(72) Inventeur: DERANCOURT, Frédéric, 66000 Perpignan (FR)
(74) Mandataire: Ipside
(86) Numéro de dépôt international: PCT/FR2018/052704
(87) Numéro de publication internationale: WO 2019/086811

(56) Documents cités:
- FR-A1- 2 879 034
- FR-A1- 2 879 034
- FR-A1- 2 881 892
- FR-A1- 2 881 892
- GB-A- 2 231 732

## Description

### Domaine de l'invention

L'invention relève des outillages pour la réalisation de travaux sur des câbles de lignes électriques. Elle s'inscrit dans le domaine des accessoires de pinces ou d'outils adaptés à dégainer un câble électrique et/ou des appareils adaptés à dégainer un câble électrique, et concerne plus particulièrement une tête de coupe pour appareil adapté à dégainer un câble électrique, une pince et un outil adapté à dégainer un câble électrique comprenant cette tête de coupe.

### État de l'art

Des appareils adaptés à dégainer un câble électrique sont connus notamment sous la forme de pinces formées par deux bras articulés l'un à l'autre et comprenant respectivement à l'une de leurs extrémités en vis-à-vis l'une de l'autre, une tête de coupe et une tête de guidage.

La tête de coupe comprend une lame destinée à couper une gaine protectrice d'un câble électrique et la tête de guidage comprend des portées prévues pour maintenir le câble en position lors de la coupe de la gaine.

En outre, il existe également des outils comprenant deux mâchoires solidaires l'une à l'autre par le biais de colonnes supports le long desquelles elles sont mobiles en translation. Ces mâchoires sont agencées de manière opposée l'une à l'autre de sorte à définir un logement à travers lequel le câble à dégainer est introduit. Une des mâchoires porte une lame faisant saillie à l'intérieur du logement, destinée à couper la gaine du câble.

L'épaisseur de la gaine peut varier selon le type et les spécifications des câbles. Il est donc nécessaire à un opérateur de prévoir plusieurs jeux de lames, de pinces ou d'outils adaptés à couper des câbles selon des profondeurs différentes les unes des autres.

Ce problème est en partie résolu par le document FR2881892, qui décrit un outil de dénudage pour élément tubulaire, tel qu'un câble électrique, comprenant une pince munie d'un organe de coupe comportant une lame circulaire. La lame est agencée dans un boitier et est liée à un organe d'entraînement de sorte à pouvoir être entraînée en rotation par actionnement dudit organe d'entraînement. Une pluralité de butées sous forme de galets et dont une est destinée à prendre appui contre le câble, est répartie autour de la périphérie de la lame. Les butées présentent des diamètres identiques et sont disposées à des distances différentes du fil de la lame, ou bien présentent des diamètres différents et sont agencées sur un même diamètre de la lame, de sorte que selon que l'une ou l'autre des butées soient en contact avec le câble, la profondeur de coupe de la lame est différente.

Ainsi, pour modifier la profondeur de coupe de la lame, l'utilisateur agit sur l'organe d'entraînement pour entraîner en rotation ladite lame.

Cet outil de dénudage présente pour inconvénient de ne pouvoir proposer qu'un nombre très limité de profondeurs de coupe différentes.

En effet, chaque profondeur de coupe est associée à une butée et l'organe de coupe, de par sa conception, peut difficilement loger plus de trois butées.

Le document FR 2 879 034 décrit un outil manuel pour dénudage de câble comprenant un mécanisme d'ajustement de la profondeur de la lame qui comprend notamment un support de lame, un fourreau de guidage et une molette de réglage. Le mécanisme d'ajustement de la profondeur de la lame permet en outre un déplacement du support de lame et de la lame de coupe en translation. L'outil manuel pour dénudage de câble comporte également un mécanisme d'orientation de la lame qui utilise une came et il faut noter que le mouvement engendré par le mécanisme d'orientation utilisant la came est un mouvement de rotation/pivotement du mécanisme d'ajustement de la profondeur de la lame.

Le document GB 2 231 732 divulgue un outil de dénudage de fil un outil de dénudage de câble comprenant un corps ayant un alésage traversant à l'intérieur duquel un câble à dénuder peut être reçu. Il comprend également un manchon monté sur le corps avec son axe sensiblement perpendiculaire à l'axe de l'alésage traversant, lequel manchon peut tourner autour de son axe par rapport au corps. L'outil comporte aussi une lame de coupe montée pour tourner avec le manchon, laquelle lame de coupe est adaptée pour couper un câble reçu dans l'alésage traversant et la lame étant mobile axialement par rapport au manchon. Enfin, l'outil comprend des moyens de came agissant conjointement entre la lame et le corps, de sorte que la rotation relative entre le manchon et le corps commande la projection de la lame dans l'alésage traversant.

### Exposé de l'invention

La présente invention a pour objectif de palier les inconvénients précités en proposant une tête de coupe pour appareil adapté à dégainer un câble permettant à un opérateur de ne pouvoir disposer que d'un unique appareil pour dégainer des câbles dont l'épaisseur de leur gaine est différente les uns des autres.

Il est à noter que par le terme « tête de coupe », on comprend que la tête de coupe est destinée à pratiquer une ou des entailles dans une gaine, jusqu'à un câble électrique ou jusqu'à des couches isolantes de câbles électriques.

Un autre objectif de la présente invention est de proposer une tête de coupe compacte et de conception simple et robuste.

A cet effet, la présente invention concerne une tête de coupe pour appareil adapté à dégainer un câble, comprenant :
- un carter de protection,
- au moins une butée agencée de manière fixe en translation par rapport au carter destinée à être en appui contre un câble à dégainer,
- une lame de coupe agencée de manière mobile en translation selon un axe T par rapport au carter, destinée à couper une gaine enveloppant le câble à dégainer,
- un élément de manœuvre agencé mobile en rotation autour d'un axe R orthogonal à l'axe T, adapté à agir sur des moyens de réglage d'une profondeur de coupe définie comme étant la distance maximale entre ladite au moins une butée et le fil de la lame de coupe, lesdits moyens de réglage comprenant un mécanisme de came qui, lorsque l'élément de manœuvre est sollicité en rotation, entraîne le déplacement de la lame de coupe en translation de sorte à ajuster la profondeur de coupe, ledit mécanisme de came comprenant :
   - une came mécaniquement lié à l'élément de manœuvre et comportant un profil de came s'étendant autour de l'axe R de rotation de l'élément de manœuvre sensiblement selon la forme d'une spirale,
   - un coulisseau agencé en coulissement dans le carter, auquel est fixée la lame, ledit coulisseau comprenant un doigt suiveur coopérant avec le profil de came,
la lame étant de forme sensiblement circulaire et étant mobile en rotation autour du doigt suiveur de sorte à être apte à être entraînée en rotation lors de la coupe d'une gaine d'un câble à dégainer, et une platine comprenant une lumière traversante adaptée à permettre le déplacement du doigt suiveur dans le profil de came étant interposée entre la lame et la came.

Ainsi, la profondeur de coupe peut être ajustée facilement par un opérateur, par actionnement de l'élément de manœuvre. Préférentiellement, la profondeur de coupe peut être ajustée de zéro à quatre millimètres.

En outre, l'au moins une butée étant fixe par rapport au carter et la lame étant mobile en translation par rapport au carter, les moyens de réglage de la profondeur de coupe permettent d'ajuster la profondeur de coupe selon un nombre important de réglages.

Autrement dit, grâce à ces caractéristiques, la tête de coupe selon l'invention permet à un utilisateur de pouvoir disposer d'un nom nombre important de profondeurs de coupe différentes avec un unique tête de coupe.

En outre, grâce au mécanisme de came logé dans le carter de protection, la tête de coupe selon l'invention présente des dimensions contenues.

Par ailleurs, la tête de coupe selon l'invention présente une conception simple et robuste.

Dans des modes particuliers de réalisation, l'invention répond en outre aux caractéristiques suivantes, mises en œuvre séparément ou en chacune de leurs combinaisons techniquement opérantes.

Par le terme « spirale », on entend que le profil de came s'étend en s'enroulant autour de l'axe R en s'éloignant progressivement.

Les termes « mécaniquement lié » définissent une liaison mécanique sans degrés de liberté.

La forme de profil de came permet un mouvement réversible de l'élément de manœuvre, c'est-à-dire le retrait ou déploiement de la lame selon que l'élément de manœuvre est entraîné en rotation par un opérateur dans un sens ou dans l'autre, entre deux butées de fin de course.

En outre, grâce à sa forme, le profil de came est configuré de sorte à favoriser une variation uniforme de la profondeur de coupe lors de la manipulation de l'élément de manœuvre, et permet un ajustement plus précis de ladite profondeur.

La caractéristique selon laquelle la lame est de forme sensiblement circulaire et est mobile en rotation autour du doigt suiveur de sorte à être apte à être entraînée en rotation lors de la coupe d'une gaine d'un câble à dégainer, permet de faciliter la progression de la lame dans la gaine à couper en éliminant ou diminuant les frottements entre le câble et la lame.

La caractéristique selon laquelle une platine comprenant une lumière traversante adaptée à permettre le déplacement du doigt suiveur dans le profil de came est interposée entre la lame et la came permet d'éviter les frictions entre la lame et la came et ainsi permet de limiter l'usure de ces éléments.

La platine est préférentiellement réalisée dans un matériau favorisant le contact avec glissement contre la lame lorsque cette dernière est entraînée en mouvement. Le phénomène de friction est ici aussi évité, ou au moins limité, de sorte à préserver la durée de vie de la lame et de la platine.

Dans des modes particuliers de réalisation de l'invention, la au moins une butée est formée par un galet mobile en rotation de sorte à être apte à rouler sur la surface d'une gaine d'un câble à dégainer lors d'une coupe de la gaine.

Cette caractéristique permet de faciliter la progression de la lame dans la gaine en éliminant ou diminuant significativement les frottements entre le câble et la tête de coupe - plus particulièrement la ou les butées.

Le matériau dans lequel la ou les butées sont réalisées est préférentiellement choisi de sorte qu'il présente, en combinaison avec le matériau constituant la gaine, un coefficient d'adhérence approprié pour générer un phénomène de roulement sans glissement.

Dans des modes particuliers de réalisation de l'invention, la tête de coupe comprend deux butées agencées de part et d'autre de la lame. Les butées sont préférentiellement maintenues à distance l'une de l'autre par un élément d'entretoise.

Cette caractéristique permet à la tête de coupe d'être davantage compacte, en minimisant ses dimensions. En outre, le fait que la tête comprenne deux butées permet d'améliorer encore l'adhérence, lors de la coupe d'une gaine, de la tête sur la gaine.

Dans des modes particuliers de réalisation de l'invention, une butée est guidée en rotation par une portée de guidage en rotation formée par le carter.

Dans des modes particuliers de réalisation de l'invention, une butée est guidée en rotation par une portée de guidage en rotation formée par l'élément de manœuvre.

Ces caractéristiques participent à la compacité de la tête de coupe.

Dans des modes particuliers de réalisation de l'invention, l'élément de manœuvre comprend une molette comportant un repère de lecture. Le carter comprend un marquage d'une échelle graduée de valeurs représentatives de la profondeur de coupe agencée autour de la molette, de sorte que lorsque le repère de lecture désigne une valeur correspondant à une profondeur de coupe réglée.

Dans des modes particuliers de réalisation de l'invention, l'élément de manœuvre comprend un mécanisme d'indexation configuré de sorte que la molette soit adaptée à occuper une pluralité de positions distinctes prédéterminées dans chacune desquelles le repère de lecture désigne une valeur différente de l'échelle graduée de valeurs.

Les positions distinctes sont des positions stables, préférentiellement définissant des pas de 0,2 millimètres de profondeur de coupe.

La présente invention concerne, selon un autre aspect, une pince adaptée à dégainer un câble comprenant deux bras articulés l'un à l'autre, lesdits bras comprenant chacun une extrémité proximale disposées en vis-à-vis l'une de l'autre et formant une poignée de manœuvre, et comprenant chacun une extrémité distale disposées en vis-à-vis l'une de l'autre, une des extrémités distale comprenant une tête de coupe telle que précédemment décrite, et l'autre extrémité distale comprenant un élément de guidage du câble à dégainer.

Encore selon un autre aspect, l'invention concerne un outil adapté à dégainer un câble comprenant deux colonnes de guidage fixées rigidement l'une à l'autre par des éléments d'entretoise, le long desquelles sont guidés en translation :
- un premier mors dont est solidaire un palonnier comportant deux bras dont un porte une tête de coupe telle que précédemment décrite et dont l'autre porte un élément de guidage du câble à dégainer, le carter formant les deux bras du palonnier de part et d'autre d'un organe de liaison avec lequel le carter est solidaire,
- un second mors dont est solidaire au moins un élément de guidage du câble à dégainer.

### Présentation des figures

L'invention sera mieux comprise à la lecture de la description suivante, donnée à titre d'exemple nullement limitatif, et faite en se référant aux figures qui représentent :
- Figure 1 : une vue en perspective de la tête de coupe selon l'invention,
- Figure 2 : une vue éclatée de la tête de coupe selon la figure 1,
- Figure 3 : une vue de face d'un coulisseau agencé en coulissement dans un carter de la tête de coupe selon la figure 1,
- Figure 4 : une vue en coupe longitudinale de la tête de coupe selon la figure 1,
- Figure 5 : une vue d'arrière d'un élément de manœuvre d'une tête de coupe selon la figure 1, dans lequel est formée une came,
- Figure 6 : une vue de face d'un élément de manœuvre d'une tête de coupe selon la figure 1, avec une coupe partielle permettant de montrer un mécanisme d'indexation,
- Figure 7 : une vue en perspective d'une pince comprenant une tête de coupe selon la figure 1,
- Figure 8 : une vue éclatée d'un palonnier comprenant une tête de coupe selon la figure 1,
- Figure 9 : une vue en perspective d'un outil pour dégainer un câble comprenant un palonnier selon la figure 8.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description détaillée de l'invention

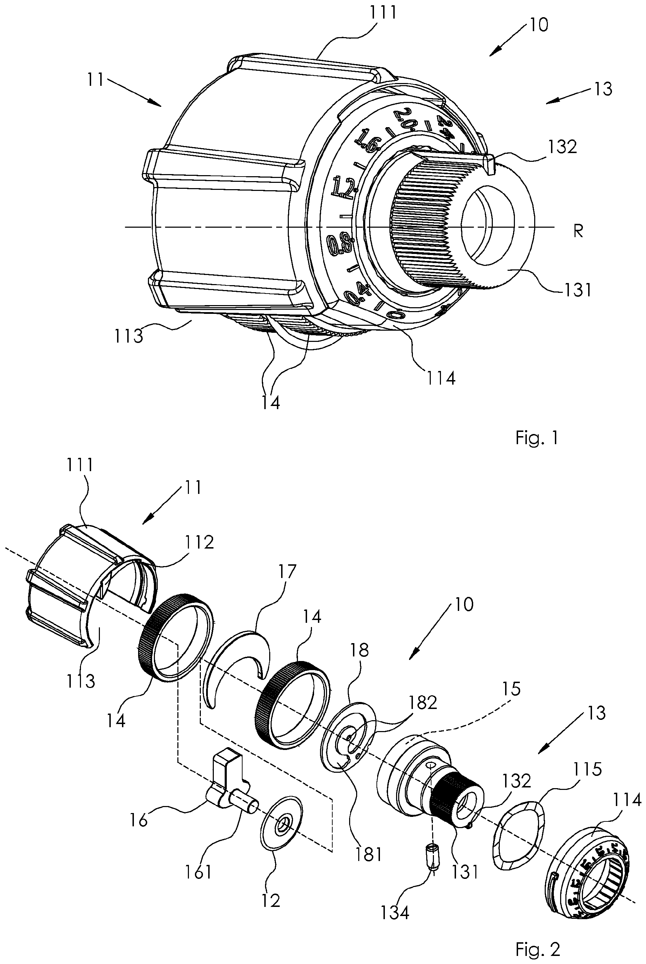

La présente invention concerne une tête de coupe **10** pour appareil adapté à dégainer un câble électrique. Comme le représentent les figures 1 à 6, la tête de coupe 10 comprend un carter **11** de protection enveloppant au moins partiellement une lame **12** de coupe destinée à couper une gaine enveloppant le câble à dégainer et au moins une butée **14** avec laquelle ladite tête de coupe 10 est destinée à prendre appui contre ledit câble à dégainer. Le carter 11 de protection enveloppe partiellement un élément de manœuvre **13** mobile en rotation autour d'un axe R adapté à agir sur des moyens de réglage d'une profondeur de coupe du câble.

La profondeur de coupe est définie comme étant la distance radiale maximale entre ladite au moins une butée 14 et le fil de la lame 12 de coupe, lorsque la lame 12 s'étend au delà de ladite au moins une butée 14.

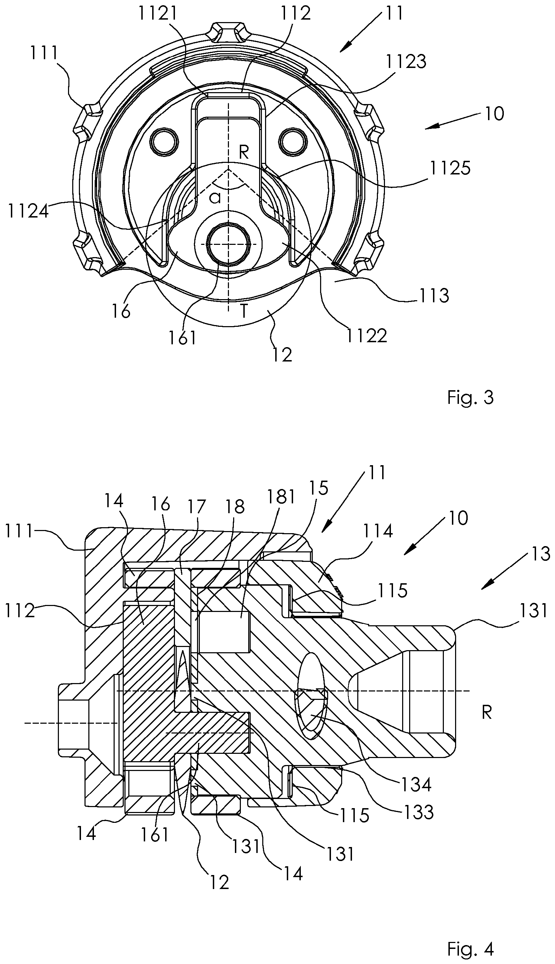

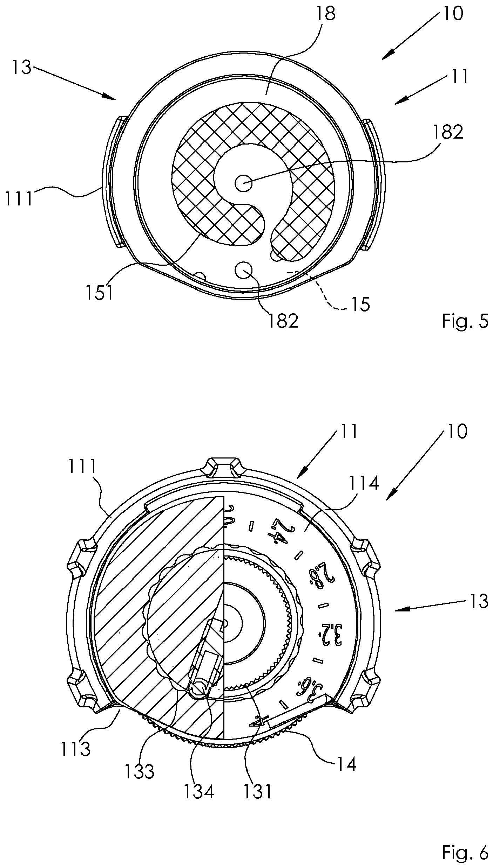

Les moyens de réglage comprennent un mécanisme de came comportant d'une part une came **15,** visible sur les figures 4 et 5, mobile en rotation par rapport au carter 11, autour de l'axe R, et mécaniquement liée à l'élément de manœuvre 13. Dans le mode de réalisation représenté par les figures 2, 4 et 5, la came 15 est formée dans l'élément de manœuvre 13. Le mécanisme de came comprend, d'autre part, un coulisseau **16** solidaire de la lame 12 et agencé de façon mobile en translation dans le carter 11 selon un axe T orthogonal à l'axe R, comme le montre la figure 3. Cette caractéristique permet avantageusement de minimiser les dimensions de la tête de coupe 10.

Plus particulièrement, la came 15 est formée dans une première extrémité de l'élément de manœuvre 13. L'élément de manœuvre 13, par sa première extrémité, constitue donc une interface avec les moyens de réglages adaptée à transmettre des efforts mécaniques nécessaires pour entraîner le coulisseau 16 en déplacement et changer la position de la lame 12 entre une position extrême rétractée dans le carter 11 et une position extrême déployée hors du carter 11, et plus particulièrement déployée au delà de ladite au moins une butée 14.

Ladite première extrémité est opposée à une seconde extrémité constituant une interface utilisateur, sur laquelle un utilisateur agit pour modifier la profondeur de coupe.

La came 15 présente un profil de came **151** s'étendant autour de l'axe R, selon une forme de spirale, comme le montre la figure 5 Plus particulièrement, le profil de came 151 est formé par une rainure pratiquée dans l'élément de manœuvre 13 s'enroulant autour de l'axe R et s'étendant en s'éloignant progressivement de ce dernier.

Le coulisseau 16 comprend un doigt suiveur **161** coopérant avec le profil de came 151 de sorte que lorsque l'élément de manœuvre 13 est sollicité en rotation, il entraîne en translation le coulisseau 16, et par voie de conséquence la lame 12, ajustant ainsi la profondeur de coupe.

La lame 12 est engagée sur le doigt suiveur 161 de manière mobile en rotation de sorte à faciliter la progression de ladite lame 12 dans la gaine du fait de l'élimination ou de la réduction des frottements entre le câble et la lame 12. Comme le montre les figures 2 à 4, la lame 12 présente donc une forme sensiblement circulaire.

Le coulisseau 16 est préférentiellement guidé en translation le long d'une rainure de guidage **112** rectiligne formée dans une paroi de fond du carter 11 décrite plus en détail ci-après. Plus précisément, comme le montrent les figures 2 et 3, la rainure de guidage 112 comprend, à l'une de ses extrémités longitudinale dite « première extrémité » **1121,** une paroi de fond pouvant constituer une butée de fin de course du coulisseau 16 et, à son autre extrémité longitudinale dite « seconde extrémité » **1122,** une ouverture par laquelle est introduit le coulisseau 16. Sur la figure 3, la rainure de guidage 112 comprend une première portion **1123,** de section longitudinale constante, adjacente à la première extrémité et s'étendant jusqu'à une deuxième portion **1124,** de section longitudinale constante plus importante, adjacente à la seconde extrémité 1122. La première portion 1123 est reliée à la deuxième portion 1124 par une troisième portion **1125** présentant une section longitudinale de forme évasée, la section de la première portion 1123 étant plus étroite que la section de la deuxième portion 1124.

Le coulisseau 16 présente une section longitudinale de forme complémentaire aux sections de la première, deuxième et troisième portion 1123, 1124 et 1125, de sorte que le guidage en translation du coulisseau 16 soit réalisé par les première et deuxième portion 1123 et 1124, permettant ainsi d'augmenter la résistance du coulisseau 16 aux efforts mécaniques.

Le coulisseau 16 est donc adapté à évoluer dans un sens d'engagement dans la rainure de guidage 112 ou dans un sens de dégagement selon le sens de rotation de l'élément de manœuvre 13.

Préférentiellement, les positions extrêmes de la lame 12, dans laquelle elle est rétractée dans le carter 11 et déployée hors du carter 11 sont définies par des butées de fin de course respectivement matérialisées par les extrémités de la rainure du profil de came 151.

Les dimensions de la deuxième portion 1124 sont choisies de sorte qu'elles permettent le passage d'une tête de vis de fixation de la tête de coupe 10 à une pince 20 ou à un outil 30. Plus particulièrement, dans le mode de réalisation représenté par la figure 4, la paroi de fond comprend un trou débouchant destiné à recevoir la vis de fixation. Ledit trou débouche par une première extrémité, au regard de l'environnement extérieur du carter 11 et, par une seconde extrémité, au regard de l'environnement intérieur du carter 11. La seconde extrémité du trou comprend une fraisure prévue pour recevoir la tête de vis de fixation. Ainsi, il est possible de fixer une tête de coupe sur une pince ou un outil 30, comme décrit plus en détail ci-après, sans compromettre le fonctionnement des moyens de réglage de la tête, ni sa compacité.

Dans le mode de réalisation représenté par la figure 1 à 9, la au moins une butée 14 est formée par un galet fixe en translation par rapport au carter 11 et mobile en rotation préférentiellement autour de l'axe R, de sorte à être apte à rouler sur la surface d'une gaine d'un câble à dégainer. A cet effet, la au moins une butée 14 comprend une bande de roulement par laquelle elle est destinée à être en appui contre le câble. Ainsi, lors de la coupe d'une gaine, la progression de la lame 12 dans la gaine est facilitée en éliminant ou diminuant significativement les frottements entre le câble et la ou les butées 14. Il est ici recherché de faire rouler sans glisser la tête de coupe 10 sur le câble à dégainer. La ou les butées 14 peuvent être réalisés dans un matériau choisi pour favoriser l'adhérence de la ou des butées 14 avec la gaine, et peuvent être pourvues de dents, cannelures ou autres reliefs régulièrement réparties le long de la bande de roulement pour améliorer encore le phénomène d'adhérence.

Les figures 1 à 6, et plus particulièrement la figure 4, montrent que la tête de coupe 10 comprend deux butées 14 agencées de part et d'autre de la lame 12 et qu'elles sont guidées en rotation par des portées de guidage respectivement formées par le carter 11 et par la première extrémité de l'élément de manœuvre 13.

Avantageusement, les butées 14 sont maintenues à distance l'une de l'autre par un élément d'entretoise 17. L'élément d'entretoise 17 est préférentiellement une pièce mince plane en forme de demi-lune, c'est-à-dire, dont la périphérie comprend une portion de forme concave dont les extrémités sont reliées aux extrémités d'une portion de forme convexe. Grace à sa forme, l'élément d'entretoise 17 n'obstrue pas le refoulement de la lame 12 dans le carter 11, comme le représente la vue en coupe de la figure 4.

L'élément d'entretoise 17 est maintenu en position par serrage entre les portées de guidage en rotation formées par le carter 11 et par l'élément de manœuvre 13.

Comme représenté par les figures 2, 4 et 5, la tête de coupe 10 comprend une platine **18** interposée entre la première extrémité de l'élément de manœuvre 13 et la lame 12. La platine 18 comprend une lumière **181** traversante prévue pour permettre le déplacement du doigt suiveur 161 dans le profil de came 151. Sur les figures 2, 4 et 5, la lumière 181 présente une forme sensiblement similaire à celle du profil de came 151 et est agencée de sorte que ladite lumière 181 coïncide avec le profil de came 151. La platine 18 est préférentiellement réalisée dans un matériau favorisant le glissement contre la lame 12 et limitant les phénomènes de friction, lorsque cette dernière est entraînée en mouvement.

De la même manière, lorsque l'élément de manœuvre 13 est entraîné en rotation, la platine 18 peut entrer en contact avec l'élément d'entretoise 17. Le matériau dans lequel est réalisée la platine 18 est donc choisi de sorte que les éventuels phénomènes de friction avec l'élément d'entretoise 17 soient réduits.

La platine 18 peut comprendre, comme le représentent les figures 2, 4 et 5, des orifices **182**, traversants ou non, avec lesquels coopèrent, selon un assemblage du type tenon et mortaise, des tétons 131 que présente la première extrémité de l'élément de manœuvre 13. Ces caractéristiques participent à la réduction des dimensions de la tête de coupe 10 et permettent la fixation de la platine 18 contre l'élément de manœuvre 13 de façon simple.

Préférentiellement, le carter 11 comporte un corps **111** de forme tubulaire creux présentant un diamètre extérieur, et un diamètre intérieur définissant un volume interne du corps 111. Comme le montre la vue éclatée de la figure 2, le corps 111 comporte une paroi de fond dans laquelle est formée la rainure de guidage 112 du coulisseau 16 en translation. Le corps 111 comprend une saignée **113** longitudinale s'étendant de la paroi de fond jusqu'à une ouverture d'extrémité opposée à la paroi de fond. La saignée 113 s'étend selon un angle α défini par deux plan passant un axe de révolution du corps 111 suffisant pour que la bande de roulement des butées 14 face saillie par rapport au diamètre extérieur du corps 111 et autorise un contact avec un câble pour une coupe circulaire ou longitudinale. Par exemple, la saignée 113 s'étend selon un angle α compris entre quatre-vingt dix degrés et cent quatre-vingt degrés. Ici, l'axe de révolution du corps 111 est confondu avec l'axe R. Par « coupe circulaire », on entend que la coupe est réalisée autour d'un axe longitudinal du câble, préférentiellement dans un plan perpendiculaire à cet axe. Par « coupe longitudinale », on entend que la coupe est réalisée le long d'un axe longitudinal, préférentiellement dans un plan contenant ledit axe longitudinal.

Le carter 11 comprend également un flasque **114** prévu pour coopérer avec le corps 111 au niveau de l'ouverture d'extrémité. Le flasque 114 permet le maintien en position et la cohésion mécanique des pièces constitutives de la tête de coupe 10 dans le volume interne du corps 111, c'est-à-dire des butées 14, de la lame 12, de l'élément de manœuvre 13 et des moyens de réglage de la profondeur de coupe. Plus particulièrement, le corps 111 et le flasque 114 comprennent respectivement des moyens d'accouplement permettant de solidariser et désolidariser le flasque 114 et le corps 111 l'un avec l'autre. Ces moyens d'accouplement peuvent être des organes de vissage ou d'autres moyens d'accouplement à la portée de l'homme du métier.

Avantageusement, les moyens d'accouplement permettent une fixation amovible du corps 111 avec le flasque 114 de sorte à pouvoir remplacer une ou des pièces d'usures, telle que la lame 12 et éventuellement les butées 14.

Le flasque 114 comprend un orifice traversant, préférentiellement de section droite circulaire, à travers lequel débouche la seconde extrémité de l'élément de manœuvre 13, comme l'illustre la vue en coupe de la figure 4.

Avantageusement, pour garantir le maintien en contact de l'ensemble des pièces les unes avec les autres, une rondelle élastique **115** peut être interposée entre l'élément de manœuvre 13 et le flasque 114.

Plus précisément, comme représenté par la vue en coupe de la figure 4, le flasque 114 comprend une portion interne destinée à être disposée en regard du volume interne du corps 111 et une portion externe destinée à être disposée en regard de l'environnement extérieur. La figure 4 montre que la portion interne comprend un lamage adapté à constituer une portée de roulement le long de laquelle l'élément de manœuvre 13 est agencé mobile en rotation autour l'axe R.

Le lamage forme une surface d'épaulement inscrite dans un plan perpendiculaire à l'axe R, sur lequel la rondelle élastique 115 est destinée à prendre appui. L'élément de manœuvre 13 comprend, entre la première et la seconde extrémité, un épaulement formant une surface annulaire inscrite dans un plan perpendiculaire à l'axe R, agencée de sorte à être en vis-à-vis de la surface d'épaulement pour que la rondelle élastique 115 soit enserrée entre ladite surface d'épaulement du lamage et ladite surface annulaire.

Dans le mode de réalisation de l'invention représenté par les figures 1 à 6, la seconde extrémité de l'élément de manœuvre 13 comprend une molette **131** comportant un repère de lecture **132**, et dans laquelle le carter 11 comprend un marquage d'une échelle graduée de valeurs représentatives de la profondeur de coupe agencée autour de la molette 131, de sorte que lorsque le repère de lecture 132 désigne une valeur, cette valeur corresponde à une profondeur de coupe réglée.

L'élément de manœuvre 13 comprend avantageusement un mécanisme d'indexation configuré de sorte que la molette 131 soit adaptée à occuper une pluralité de positions distinctes prédéterminées, stables, dans chacune desquelles le repère de lecture 132 désigne une valeur de l'échelle graduée de valeurs différente des autres. Plus précisément, comme la figure 6 le montre, le mécanisme d'indexation comprend un doigt d'indexation **134** du type « poussoir à bille » agencé dans un logement radial de l'élément de manœuvre 13. Le doigt d'indexation 134 est prévu pour coopérer avec des cannelures **133** intérieures réparties dans le flasque 114. Préférentiellement ces cannelures 133 s'étendent axialement d'une extrémité à l'autre de l'orifice traversant.

Préférentiellement, la forme du profil de came 151 et la répartition des cannelures 133 sont choisies de sorte que les positions distinctes de la molette 131 définissent des pas de 0,2 millimètres de profondeur de coupe, l'échelle graduée comprenant des valeurs correspondantes à ce pas.

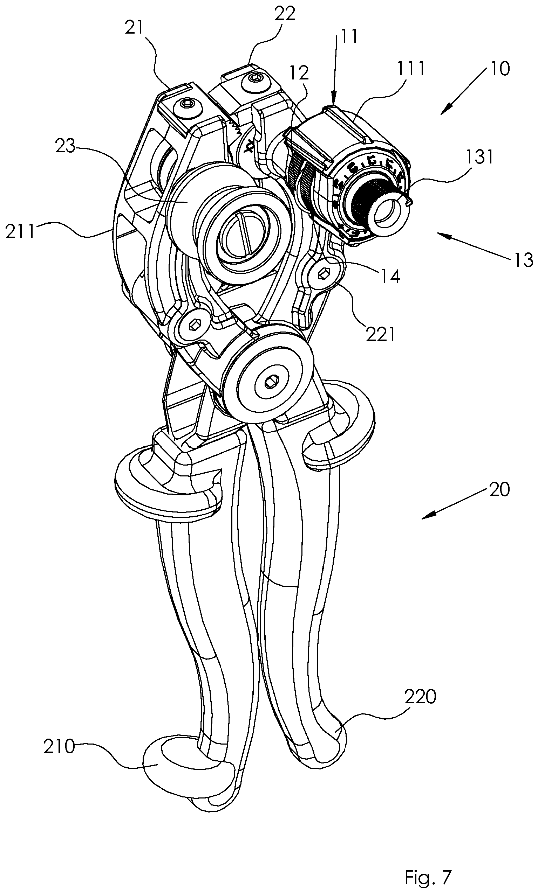

La présente invention concerne également une pince **20** adaptée à dégainer comprenant deux bras **21** et **22** articulés l'un à l'autre, comme représentée par la figure 7. Les bras 21 et 22 comprennent chacun une extrémité proximale **210** et **220** disposées en vis-à-vis l'une de l'autre, formant une poignée de manœuvre. Les bras 21 et 22 comprennent également chacun une extrémité distale **211** et **221** disposées en vis-à-vis l'une de l'autre. Une des extrémités distale 221 comporte une tête de coupe 10 et l'autre extrémité distale 211 comporte un élément de guidage **23** du câble à dégainer.

La figure 7 représente une pince adaptée à couper la gaine de manière longitudinale et circulaire, c'est-à-dire adapté à réaliser une coupe de la gaine s'étendant le long d'un axe longitudinal du câble et adapté à réaliser une coupe de la gaine s'étendant autour de l'axe longitudinal du câble.

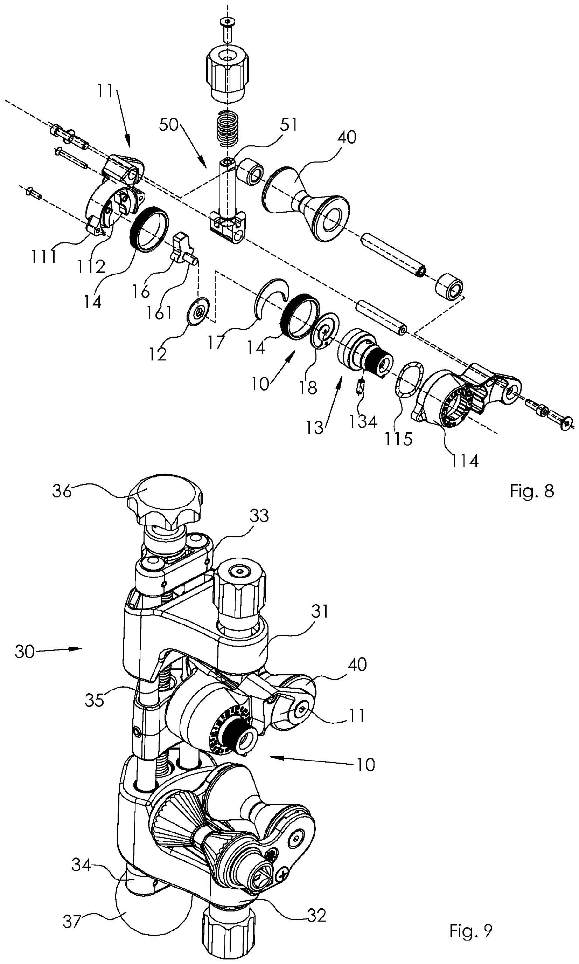

La présente invention concerne, en outre, selon un autre aspect, un outil **30** adapté à dégainer un câble, comprenant deux mors **31** et **32**, dits respectivement « premier mors » 31 et « second mors » 32, adaptés à former une mâchoire destinée à enserrer le câble à dégainer, comme les figures 8 et 9 l'illustrent.

L'outil 30 comprend un mécanisme de réglage de la distance d'écartement des premier et second mors 31 et 32. Préférentiellement, comme le représente la figure 9 dans un mode de réalisation de l'invention, le mécanisme de réglage comprend deux colonnes de guidage, parallèles, réunies rigidement à leurs extrémités en vis-à-vis par au moins deux entretoises **33** et **34** de manière à former un cadre rigide. Les deux mors 31 et 32 sont montés de manière coulissante sur les deux colonnes et sont disposés de manière symétrique par rapport à un plan P géométrique (non illustré sur les figures) médian au cadre et orthogonal aux colonnes.

Dans le mode de réalisation représenté par la figure 9, le mécanisme de réglage comprend, en outre, une tige filetée **35**, portant à une première extrémité longitudinale un bouton de manœuvre **36**. Cette tige filetée 35 s'étend parallèlement aux colonnes de guidage et est engagée de manière libre en rotation, par une portée lisse cylindrique qu'elle présente, dans un perçage traversant formé dans l'entretoise la plus proche du bouton de la première extrémité de la tige filetée 35, appelée ci-après « entretoise proximale » 33. La tige filetée 35 présente à une seconde extrémité longitudinale une seconde portée lisse par laquelle elle est engagée en rotation dans un perçage pratiqué dans l'autre entretoise appelée ci-après « entretoise distale » **34**.

La tige filetée 35 est immobilisée en translation par rapport au cadre par tout moyen à la portée de l'homme du métier, tel que des épaulements pratiqués à la première et à la seconde extrémité de la tige filetée 35, respectivement agencés en appui contre l'entretoise proximale 33 et contre l'entretoise distale 34.

Dans le mode de réalisation représenté par la figure 9, la tige filetée 35 comporte deux sections filetées selon des pas inversés. Ces sections filetées sont respectivement engagées en vissage dans un taraudage traversant pratiqué dans l'un et l'autre des deux mors 31 et 32.

Un palonnier comprenant deux bras dont un porte une tête de coupe 10 et dont l'autre porte un élément de guidage **40** du câble à dégainer est solidaire du premier mors 31. Les deux bras sont formés par le carter 11, de part et d'autre d'un organe de liaison **50** avec lequel ledit carter 11 est solidaire. Chaque bras comprend deux branches, respectivement formées par le flasque 114 et le corps 111.

Plus particulièrement, comme le représente la figure 8, l'élément de guidage 40 présente la forme d'un diabolo et est monté libre en rotation autour de son axe de révolution. Préférentiellement l'élément de guidage 40 est emmanché sur un axe de pivot, dit « premier axe de pivot », fixé par l'une de ses extrémités au flasque 114, et par son autre extrémité, au corps 111. L'élément de guidage 40 est préférentiellement monté sur le premier axe de pivot grâce à des paliers de manière connue de l'homme du métier. L'axe de pivot est par exemple fixé aux branches des bras par vissage, tel que le montre l'éclatée la figure 8.

Il y a lieu de noter que dans le texte de la présente demande, on entend par « forme de diabolo », une forme comportant deux troncs de cône inversés, lesdits troncs de cône se faisant face par leurs petites bases. Le terme tronc de cône doit être ici interprété de manière large, comme représentant une forme de section transversale décroissante ou croissante.

L'organe de liaison 50 comprend un arbre **51** engagé à travers le premier mors 31, dans un orifice traversant s'étendant parallèlement aux colonnes de guidage. L'arbre 51 est emmanché, par l'une de ses extrémités, sur un second un axe de pivot sensiblement parallèle au premier axe de pivot et fixé par l'une de ses extrémités au flasque 114, et par son autre extrémité, au corps 111, entre les deux bras de palonniers.

Le carter est donc mobile en rotation autour du second axe de pivot.

L'organe de liaison 50 comprend également des moyens de fixation destinés à solidariser l'arbre 51 avec le premier mors 31.

L'outil 30, pour dégainer, peut avantageusement comprendre une poignée de préhension **37** disposée à l'opposé du bouton de manœuvre 36 de sorte à pouvoir être saisie par l'utilisateur pour la manœuvre de l'outil 30 lors d'une opération de dégainage du câble.

Au moins un élément de guidage du câble à dégainer est solidaire du second mors 32.

Dans le mode de réalisation de l'invention représenté par la figure 9, le second mors comprend deux éléments de guidage respectivement supportés par chaque bras d'un palonnier.

Les deux éléments de guidage présentent chacun la forme d'un diabolo libre en rotation autour de son axe de révolution, les axes de révolution des deux diabolos étant parallèles entre eux. Les deux éléments de guidage sont préférentiellement fixés au palonnier de manière analogue à l'élément de guidage 40 auquel est solidaire le premier mors 31.

Comme le montre la figure 9, au moins un des diabolos comporte avantageusement des cannelures pour favoriser l'adhérence du l'élément de guidage avec la gaine du câble.

Il y a lieu de noter que le corps 111, le flasque 114 et l'élément de manœuvre 13 sont fabriqués en matériau isolant électrique pour protéger l'opérateur contre le risque d'électrocution ou d'électrisation lorsqu'un opérateur intervient sur un câble sous tension électrique, de la même manière notamment que les extrémités proximales **210** et **220** des bras **21 et 22**.

De manière plus générale, il est à noter que les modes de mise en œuvre et de réalisation de l'invention considérés ci-dessus ont été décrits à titre d'exemples non limitatifs et que d'autres variantes sont pas conséquents envisageables.

## Revendications

1. Tête de coupe (10) pour appareil adapté à dégainer un câble, comprenant :
- un carter (11) de protection,
- au moins une butée (14) agencée de manière fixe en translation par rapport au carter (11) destinée à être en appui contre un câble à dégainer,
- une lame (12) de coupe, de forme sensiblement circulaire, destinée à couper une gaine enveloppant le câble à dégainer,
- un élément de manœuvre (13) agencé mobile en rotation autour d'un axe R orthogonal à l'axe T, adapté à agir sur des moyens de réglage d'une profondeur de coupe définie comme étant la distance maximale entre ladite au moins une butée (14) et le fil de la lame (12), lesdits moyens de réglage comprenant un mécanisme de came qui, lorsque l'élément de manœuvre (13) est sollicité en rotation, entraîne le déplacement de la lame (12) en translation de sorte à ajuster la profondeur de coupe, **caractérisé en ce que** la lame (16) est agencée de manière mobile en translation selon un axe T par rapport au carter (11) et **en ce que** ledit mécanisme de came comprenant :
• une came (15) mécaniquement lié à l'élément de manœuvre (13) et comportant un profil de came (151) s'étendant autour de l'axe R de rotation de l'élément de manœuvre (13) sensiblement selon la forme d'une spirale,
• un coulisseau (16) agencé en coulissement dans le carter (11), auquel est fixée la lame (12), ledit coulisseau (16) comprenant un doigt suiveur (161) coopérant avec le profil de came (151),
et **en ce que** la lame (10) est mobile en rotation autour du doigt suiveur (161) de sorte à être apte à être entraînée en rotation lors de la coupe d'une gaine d'un câble à dégainer, et **en ce qu'**une platine (18) comprenant une lumière (181) traversante adaptée à permettre le déplacement du doigt suiveur (161) dans le profil de came (151) est interposée entre la lame (12) et la came (15).

2. Tête de coupe (10) pour appareil adapté à dégainer un câble selon la revendication 1, dans laquelle la au moins une butée (14) est formée par un galet mobile en rotation de sorte à être apte à rouler sur la surface d'une gaine d'un câble à dégainer.

3. Tête de coupe (10) pour appareil adapté à dégainer un câble selon l'une quelconque des revendications 1 ou 2, comprenant deux butées (14) agencées de part et d'autre de la lame (12), maintenues à distance l'une de l'autre par un élément d'entretoise (17).

4. Tête de coupe (10) pour appareil adapté à dégainer un câble selon l'une des revendications 2 ou 3, dans laquelle une butée (14) est guidée en rotation par une portée de guidage en rotation formée par le carter (11).

5. Tête de coupe (10) pour appareil adapté à dégainer un câble selon l'une des revendications 2 à 4, dans laquelle une butée (14) est guidée en rotation par une portée de guidage en rotation formée par l'élément de manœuvre (13).

6. Tête de coupe (10) pour appareil adapté à dégainer un câble selon l'une des revendications 1 à 5, dans laquelle l'élément de manœuvre (13) comprend une molette (131) comportant un repère de lecture (132), et dans laquelle le carter (11) comprend un marquage d'une échelle graduée de valeurs représentatives de la profondeur de coupe, agencée autour de la molette (131), de sorte que lorsque le repère de lecture (132) désigne une valeur correspondant à une profondeur de coupe réglée.

7. Tête de coupe (10) pour appareil adapté à dégainer un câble selon la revendication 6, dans laquelle l'élément de manœuvre (13) comprend un mécanisme d'indexation configuré de sorte que la molette (131) soit adaptée à occuper une pluralité de positions distinctes prédéterminées dans chacune desquelles le repère de lecture (132) désigne une valeur différente de l'échelle graduée de valeurs.

8. Pince (20) adaptée à dégainer un câble comprenant deux bras (21, 22) articulés l'un à l'autre, lesdits bras (21, 22) comprenant chacun :
- une extrémité proximale (210, 220), lesdites extrémités proximales (210, 220) étant disposées en vis-à-vis l'une de l'autre et formant une poignée de manœuvre, et
- une extrémité distale (211, 221), lesdites extrémités distales (211, 221) étant disposées en vis-à-vis l'une de l'autre, une des extrémités distale (221) comprenant une tête de coupe (10) selon l'une des revendications 1 à 7, et l'autre extrémité distale (211) comprenant un élément de guidage (23) du câble à dégainer.

9. Outil (30) adapté à dégainer un câble comprenant deux colonnes de guidage fixées rigidement l'une à l'autre par des éléments d'entretoise, et le long desquelles sont guidés en translation :
- un premier mors (31) dont est solidaire un palonnier comportant deux bras dont un porte une tête de coupe (10) selon l'une des revendications 1 à 7 et dont l'autre porte un élément de guidage (40) du câble à dégainer, le carter (11) formant les deux bras du palonnier de part et d'autre d'un organe de liaison (50) avec lequel le carter (11) est solidaire,
- un second mors (32) sont est solidaire au moins un élément de guidage du câble à dégainer.

## Patentansprüche

1. Schneidkopf (10) für eine Vorrichtung, die zum Abisolieren eines Kabels geeignet ist, umfassend:
- ein Schutzgehäuse (11),
- mindestens einen in Bezug auf das Gehäuse (11) unverschiebbar eingerichteten Anschlag (14), der dazu bestimmt ist, an einem Kabel, das abisoliert werden soll, anzuliegen,
- eine Schneidklinge (12) von im Wesentlichen kreisrunder Form, die dazu bestimmt ist, einen Mantel, der das abzuisolierende Kabel umhüllt, zu schneiden,
- ein um eine zur Achse T orthogonale Achse R drehbeweglich eingerichtetes Betätigungselement (13), das geeignet ist, auf Mittel zum Einstellen einer Schnitttiefe, die als maximaler Abstand zwischen dem mindestens einen Anschlag (14) und der Schneide der Klinge (12) definiert ist, zu wirken, wobei die Einstellmittel einen Nockenmechanismus umfassen, der, wenn das Betätigungselement (13) gedreht wird, die Verschiebebewegung der Klinge (12) bewirkt, um die Schnitttiefe anzupassen, **dadurch gekennzeichnet, dass** die Klinge (16) in Bezug auf das Gehäuse (11) entlang einer Achse T verschiebebeweglich eingerichtet ist, und dadurch, dass der Nockenmechanismus umfasst:
- eine Nocke (15), die mechanisch mit dem Betätigungselement (13) verbunden ist und ein Nockenprofil (151) umfasst, das sich im Wesentlichen in Form einer Spirale um die Drehachse R des Betätigungselements (13) erstreckt,
- ein gleitend im Gehäuse (11) eingerichtetes Gleitstück (16), an dem die Klinge (12) befestigt ist, wobei das Gleitstück (16) einen Nachlaufstift (161) umfasst, der mit dem Nockenprofil (151) zusammenwirkt, und dadurch, dass die Klinge (10) um den Nachlaufstift (161) herum drehbeweglich ist, sodass sie in der Lage ist, beim Schneiden eines Mantels eines abzuisolierenden Kabels in Drehung versetzt zu werden, und dadurch, dass zwischen der Klinge (12) und der Nocke (15) eine Platte (18) eingefügt ist, die eine Durchgangsöffnung (181) umfasst, welche geeignet ist, die Bewegung des Nachlaufstifts (161) im Nockenprofil (151) zu ermöglichen.

2. Schneidkopf (10) für eine Vorrichtung, die zum Abisolieren eines Kabels geeignet ist, nach Anspruch 1, wobei der mindestens eine Anschlag (14) von einer drehbeweglichen Rolle gebildet wird, sodass er in der Lage ist, auf der Oberfläche eines Mantels eines abzuisolierenden Kabels zu rollen.

3. Schneidkopf (10) für eine Vorrichtung, die zum Abisolieren eines Kabels geeignet ist, nach einem der Ansprüche 1 oder 2, der zwei beidseits der Klinge (12) eingerichtete Anschläge (14) umfasst, die von einem Abstandselement (17) in Abstand voneinander gehalten werden.

4. Schneidkopf (10) für eine Vorrichtung, die zum Abisolieren eines Kabels geeignet ist, nach einem der Ansprüche 2 oder 3, wobei ein Anschlag (14) von einer vom Gehäuse (11) gebildeten Drehführungsfläche drehend geführt wird.

5. Schneidkopf (10) für eine Vorrichtung, die zum Abisolieren eines Kabels geeignet ist, nach einem der Ansprüche 2 bis 4, wobei ein Anschlag (14) von einer vom Betätigungselement (13) gebildeten Drehführungsfläche drehend geführt wird.

6. Schneidkopf (10) für eine Vorrichtung, die zum Abisolieren eines Kabels geeignet ist, nach einem der Ansprüche 1 bis 5, wobei das Betätigungselement (13) ein Rädchen (131) umfasst, das eine Ablesehilfe (132) umfasst, und wobei das Gehäuse (11) eine Beschriftung mit einer Skala von für die Schnitttiefe repräsentativen Werten umfasst, die so um das Rädchen (131) herum eingerichtet ist, dass wenn die Ablesehilfe (132) einen Wert bezeichnet, der einer eingestellten Schnitttiefe entspricht.

7. Schneidkopf (10) für eine Vorrichtung, die zum Abisolieren eines Kabels geeignet ist, nach Anspruch 6, wobei das Betätigungselement (13) einen Indexierungsmechanismus umfasst, der so ausgelegt ist, dass das Rädchen (131) geeignet ist, eine Vielzahl verschiedener vorbestimmter Positionen einzunehmen, in jeder von denen die Ablesehilfe (132) einen anderen Wert der Werteskala bezeichnet.

8. Zum Abisolieren eines Kabels geeignete Zange (20), die zwei aneinander angelenkte Schenkel (21, 22) umfasst, wobei die Schenkel (21, 22) jeweils umfassen:
- ein proximales Ende (210, 220), wobei die proximalen Enden (210, 220) einander gegenüberliegend angeordnet sind und einen Betätigungsgriff bilden, und
- ein distales Ende (211, 221), wobei die distalen Enden (211, 221) einander gegenüberliegend angeordnet sind, wobei eines der distalen Enden (221) einen Schneidkopf (10) nach einem der Ansprüche 1 bis 7 umfasst, und wobei das andere distale Ende (211) ein Führungselement (23) für das abzuisolierende Kabel umfasst.

9. Zum Abisolieren eines Kabels geeignetes Werkzeug (30), das zwei mit Abstandselementen starr aneinander befestigte Führungssäulen umfasst, denen entlang verschiebegeführt werden:
- eine erste Backe (31), mit der eine Traverse fest verbunden ist, welche zwei Schenkel umfasst, von denen einer einen Schneidkopf (10) nach einem der Ansprüche 1 bis 7 trägt, und von denen der andere ein Führungselement (40) für das abzuisolierende Kabel trägt, wobei das Gehäuse (11) die zwei Schenkel der Traverse beidseits eines Verbindungsglieds (50), mit dem das Gehäuse (11) fest verbunden ist, bildet,
- eine zweite Backe (32), mit der mindestens ein Führungselement für das abzuisolierende Kabel fest verbunden ist.

## Claims

1. A cutting head (10) for an apparatus suited to strip a cable, comprising:
- a protective casing (11),
- at least one stop (14) arranged fixed in translation relative to the casing (11) intended to bear against a cable to be stripped,
- a cutting blade (12), with a substantially circular shape, intended to cut a sheath wrapping the cable to be stripped,
- a handling element (13) arranged movable in rotation around an axis R orthogonal to the axis T, adapted to act on setting means for setting a cutting depth defined as being the maximum distance between said at least one stop (14) and the edge of the blade (12), said setting means comprising a cam mechanism which, when the handling element (13) is rotated, causes the movement of the blade (12) in translation so as to adjust the cutting depth, **characterised in that** the blade (16) is arranged movable in translation according to an axis T relative to the casing (11) and **in that** said cam mechanism comprising:
• a cam (15) mechanically linked to the handling element (13) and including a cam profile (151) extending around the axis R of rotation of the handling element (13) substantially according to a spiral-like shape,
• a slider (16) slidably arranged within the casing (11), to which is fastened the blade (12), said slider (16) comprising a follower finger (161) cooperating with the cam profile (151),
and **in that** the blade (10) is movable in rotation around the follower finger (161) so as to be able to be driven in rotation when cutting a sheath of a cable to be stripped, and **in that** a plate (18) comprising an aperture (181) adapted to enable the movement of the follower finger (161) in the cam profile (151) is interposed between the blade (12) and the cam (15).

2. The cutting head (10) for an apparatus suited to strip a cable according to claim 1, wherein the at least one stop (14) is formed by a roller movable in rotation so as to be able to roll on the surface of a sheath of a cable to be stripped.

3. The cutting head (10) for an apparatus suited to strip a cable according to any one of claims 1 or 2, comprising two stops (14) arranged on either side of the blade (12), held at a distance from each other by a spacer element (17) .

4. The cutting head (10) for an apparatus suited to strip a cable according to one of claims 2 or 3, wherein a stop (14) is guided in rotation by a rotational guide surface formed by the casing (11).

5. The cutting head (10) for an apparatus suited to strip a cable according to one of claims 2 to 4, wherein a stop (14) is guided in rotation by a rotational guide surface formed by the handling element (13).

6. The cutting head (10) for an apparatus suited to strip a cable according to one of claims 1 to 5, wherein the handling element (13) comprises a knob (131) including a reading mark (132), and wherein the casing (11) comprises a marking of a graduated scale of values representative of the cutting depth, arranged around the knob (131), so that when the reading mark (132) designates a value corresponding to a set cutting depth.

7. The cutting head (10) for an apparatus suited to strip a cable according to claim 6, wherein the handling element (13) comprises an indexing mechanism configured so that the knob (131) is adapted to occupy a plurality of predetermined distinct positions in each of which the reading mark (132) designates a different value of the graduated scale of values.

8. A clamp (20) suited to strip a cable comprising two arms (21, 22) hinged to one another, each of said arms (21, 22) comprising:
- a proximal end (210, 220), said proximal ends (210, 220) being disposed opposite each other and forming a handling grip, and
- a distal end (211, 221), said distal ends (211, 221) being disposed opposite each other, one of the distal ends (221) comprising a cutting head (10) according to one of claims 1 to 7, and the other distal end (211) comprising a guide element (23) of the cable to be stripped.

9. A tool (30) suited to strip a cable comprising two guide columns rigidly fastened to one another by spacer elements, and along which are guided in translation:
- a first jaw (31) to which is secured a lifter including two arms, one of which carries a cutting head (10) according to one of claims 1 to 7 and the other one carries an element (40) for guiding the cable to be stripped, the casing (11) forming the two arms of the lifter on either side of a connecting member (50) to which the casing (11) is secured,
- a second jaw (32) to which is secured at least one element for guiding the cable to be stripped.
